# EUROPÄISCHE PATENTSCHRIFT

(11) **EP 0 958 629 B1**
(45) Veröffentlichungstag und Bekanntmachung des Hinweises auf die Patenterteilung: **11.06.2003**
(21) Anmeldenummer: 97921660.3
(22) Anmeldetag: 18.04.1997
(51) Int. Cl.: H01M 8/06, B01D 53/32, C01B 3/50

(54) **VORRICHTUNG UND VERFAHREN ZUR KOMBINIERTEN REINIGUNG UND KOMPRESSION VON CO-HALTIGEM WASSERSTOFF SOWIE IHRE VERWENDUNG IN BRENNSTOFFZELLENANLAGEN**
DEVICE AND METHOD FOR COMBINED PURIFICATION AND COMPRESSION OF HYDROGEN CONTAINING CO AND THE USE THEREOF IN FUEL CELL ASSEMBLIES
DISPOSITIF ET PROCEDE POUR EPURATION ET COMPRESSION COMBINEES D'HYDROGENE CONTENANT DU CO ET LEUR UTILISATION DANS CES INSTALLATIONS A PILES A COMBUSTIBLE

(30) Priorität: 19.04.1996 DE 19615562
(43) Veröffentlichungstag der Anmeldung: 24.11.1999
(73) Patentinhaber: Zentrum für Sonnenenergie- und Wasserstoff-Forschung Baden-Württemberg Gemeinnützige Stiftung, 70565 Stuttgart (DE)
(72) Erfinder: EBERLE, Klaus, D-88400 Biberach (DE); ROHLAND, Bernd, D-89081 Ulm (DE); SCHOLTA, Joachim, D-89073 Ulm (DE); STROEBEL, Raimund, D-89073 Ulm (DE)
(74) Vertreter: Merkle, Gebhard
(86) Internationale Anmeldenummer: EP9701959
(87) Internationale Veröffentlichungsnummer: WO97040542

(56) Entgegenhaltungen:
- WO-A-95/08850
- GB-A- 2 268 322
- US-A- 3 401 099
- US-A- 4 620 914
- DATABASE WPI Section Ch, Week 9107 Derwent Publications Ltd., London, GB; Class E36, AN 91-047145 XP002038989 & JP 02 311 302 A (MITSUBISHI HEAVY IND CO LTD) , 26.Dezember 1990 & PATENT ABSTRACTS OF JAPAN vol. 15, no. 100 (C-0813) JP & CHEMICAL ABSTRACTS, vol. 114, no. 16, 22.April 1991 Columbus, Ohio, US; abstract no. 146293, XP000186582

## Beschreibung

Die Erfindung betrifft eine Vorrichtung und ein Verfahren zur kombinierten Reinigung und Kompression von CO-haltigem Wasserstoff sowie die Verwendung des so erhaltenen Wasserstoffs als Brenngas in Polymer-Elektrolyt-Membran (PEM)-Brennstoffzellen.

Brennstoffzellen zeichnen sich durch einen hohen elektrischen Wirkungsgrad. niedrige Schadstoffemissionen sowie geringe Geräuschentwicklung aus und sind daher zum Antrieb von Fahrzeugen sehr gut geeignet. Für diese Anwendung ist die Polymer-Elektrolyt-Membran (PEM)-Brennstoffzelle aufgrund ihres Betrtebstemperaturbereichs, Ihrer Robustheit und ihrer Toleranz gegenüber Druckschwankungen favorisiert. PEM-Brennstoffzellen müssen Jedoch mit reinem Wasserstoff (H₂) als Brennstoff betrieben werden. Vorteilhaft ist andererseits, daß als Oxidationsmittel neben Sauerstoff (O₂) auch Luft eingesetzt werden kann. CO-Anteile in dem als Brenngas eingesetzten Wasserstoff über 20 ppm führen zur Vergiftung der Elektrode und zu einem starkem Leistungsabfall, verbunden mit einem überhöhten spezifischen Energieverbrauch.

Die Reinigung von Wasserstoff erfolgt herkömmlicherweise diskontinuierlich mittels Druckwechseladsorption (PSA). Die hierauf beruhenden Verfahren sind jedoch mit einem hohen spezifischen Energieverbrauch verbunden, erfordern einen voluminösen Aufbau und sind somit für den Fahrzeugbetrieb nicht geeignet.

Bekannte mechanische Verfahren zur Verdichtung von Wasserstoff umfassen beispielsweise die Verwendung von Kolben-. Schrauben- und Wälzlagerkompressoren. Solche Verfahren sind jedoch mit hohen Geräuschemissionen verbunden und erfordern insbesondere bei Anlagen bis zu 10 kW elektrischer Leistung einen hohen spezifischen Energieeinsatz.

Aus der GB-A-2 268 322 ist es bekannt, daß sich reiner Wasserstoff elektrochemisch mit PEM-Zellen bis zu einem Differenzdruck von 5 bar komprimieren läßt. Oberhalb eines solches Differenzdrucks treten bei den Elektrodenhalterungen der bekannten PEM-Zellen Rißbildungen auf.

Aus Methanol oder anderen Kohlenwasserstoffen als Reformergas gewonnener Wasserstoff enthält in variierenden Mengen Kohlenmonoxid (CO). Die Bereitstellung von reinstem. CO-freiem Wasserstoff aus solchen Reformergasen, insbesondere für die Kaltstartphase von Brennstoffzellen-Fahrzeugen unter gleichzeitiger Gewährleistung eines Lastwechselverhaltens im Millisekunden- bis Sekundenbereich ist technisch noch nicht vollständig gelöst.

Der vorliegenden Erfindung liegt daher die Aufgabe zugrunde, eine geräuscharme und energieeffiziente Vorrichtung sowie ein Verfahren zur kombinierten Reinigung und Kompression von CO-haltigem Wasserstoff vorzusehen, wobei Differenzdrucke von mindestens etwa 10 bar erreichbar sind.

Diese Aufgabe wird erfindungsgemäß durch eine Vorrichtung gemäß Anspruch 1 sowie ein Verfahren gemäß Anspruch 7 gelöst. Vorteilhafte bzw. besonders zweckmäßige Ausgestaltungen des Erfindungsgegenstandes sind in den Unteransprüchen angegeben.

Gegenstand der Erfindung ist daher eine Vorrichtung zur kombinierten Reinigung und Kompression von CO-haltigem Wasserstoff, umfassend eine Polymer-Elektrolyt-Membran (PEM)-Zelle mit einer protonenleitenden Polymermembran, einerAnode auf der einen und einer Kathode auf der anderen Seite der Membran, wobei die Anode als Doppelschichtanode ausgebildet ist, die eine CO-oxidationsselektive Katalysatorschicht auf der der Membran abgewandten Seite sowie eine elektrochemisch aktive Schicht zur Oxidation des Wasserstoffs zu Protonen auf der der Membran zugewandten Seite umfaßt, und mit einer an der Anodenseite vorgesehenen, ebenen porösen Trägerschicht, die an einen Stromkollektor anschließt. so daß die PEM-Zelle Differenzdrucken von mindestens etwa 10 bar standhält.

Gegenstand der Erfindung ist ferner ein Verfahren zur kombinierten Reinigung und Kompression von CO-haltigem Wasserstoff mittels einer erfindungsgemäßen Vorrichtung, wobei das CO in dem CO-haltigen Wasserstoff in der ersten PEM-Zelle selektiv zu CO₂ oxidiert wird, indem dem Wasserstoff eine dem CO-Gehalt entsprechende Menge Sauerstoff beigemischt wird, welcher das CO an der CO-oxidatlonsselektiven Katalysatorschicht der Doppelschichtanode katalytisch zu CO₂ oxidiert, und wobei der nunmehr weitgehend CO-freie Wasserstoff durch die PEM-Zelle elektrochemisch auf Differenzdrucke von mindestens etwa 10 bar komprimiert wird, indem die elektrochemisch aktive Schicht der Doppelschichtanode den Wasserstoff zu Protonen oxidiert, die nach Passieren der Membran an der Kathodenseite unter Druck zu reinstem Wasserstoff entladen werden.

Gegenstand der Erfindung ist schließlich die Verwendung eines nach dem erfindungsgemäßen Verfahren erhaltenen Wasserstoffs als Brenngas in PEM-Brennstoffzellen, insbesondere für Fahrzeuge.

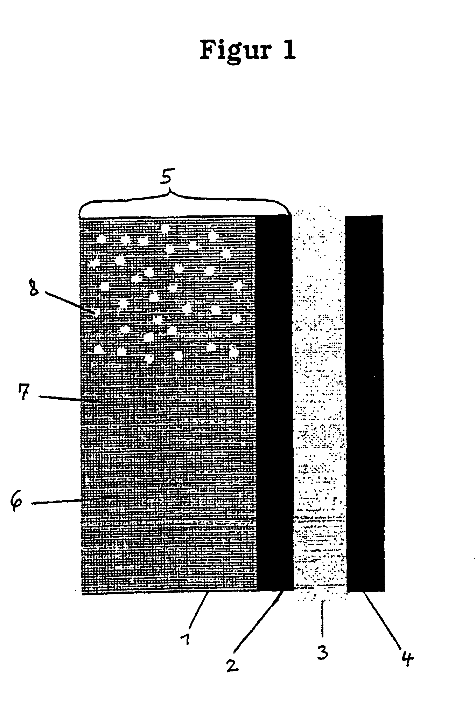

Die Erfindung wird anhand der beiliegenden Zeichnung näher erläutert. wobei **Figur 1** den schematischen Aufbau einer erfindungsgemäß eingesetzten Doppelschichtanode im Verbund mit einer Polymermembran und einer Kathode zeigt.

Gemäß der Erfindung hat sich gezeigt, daß die Reinigung von CO-haltigem Wasserstoffgas in einfacher Weise dadurch erzielt werden kann, daß bei der elektrochemischen Wasserstoffkompression eine PEM-Zelle eingesetzt wird, die eine als Doppelschichtanode ausgebildete Elektrode enthält, wobei eine Schicht der Doppelschichtanode katalytisch wirkt, um im Wasserstoffgas enthaltenes CO selektiv mittels zugemischtem Sauerstoff in CO₂ zu oxidieren. Je nach CO-Anteil können beispielsweise bis zu 1000 ppm Sauerstoff dem Wasserstoffgas zugemischt werden. Durch diese Reinigungswirkung wird der CO-Gehalt des Wasserstoffs so weit herabgesetzt. daß die zweite Schicht der Doppelschichtanode, nämlich die elektrochemisch wirkende Elektrodenschicht, nicht durch CO vergiftet wird. Die zweite Elektrodenschicht kann daher die Funktion einer üblichen PEM-Anode ausüben und den nunmehr weitgehend CO-freien Wasserstoff zu Protonen oxidieren. die nach dem Passieren der Polymermembran an der Kathode unter Druck zu reinstem Wasserstoff entladen werden. Auf diese Weise wirkt die PEM-Zelle wie ein kontinuierliches CO-Getter.

Mittels der erfindungsgemäßen Vorrichtung gelingt es, das reine Wasserstoffgas aufmindestens etwa 10 bar zu verdichten. Die bei herkömmlichen PEM-Zellen oberhalb etwa 5 bar Differenzdruck auftretenden Rißbildungen an den Elektrodenhalterungen werden erfindungsgemäß durch entsprechende Armierungen auf der Anodenseite der PEM-Zelle verhindert. Dies wird dadurch erreicht, daß die Elektrode-Membran-Elektrode-Einheit auf der Anodenseite (Niederdruckseite bzw. Wasserstoffgas-Zuführseite) mittels einer ebenen Gasverteilungsschicht geringer Rauhigkeit so geträgert wird, daß keine durch Hohlräume, wie Gasverteilungskanäle. bedingten Unebenheiten entstehen, welche ein Reißen der Membran bei hohen Differenzdrucken verursachen könnten. Diese Gasverteilungsschicht schließt an eine ebene bzw. glatte Stromkollektorplatte.

Gemäß einer Ausführungsform weist die Stromkollektorplatte keine Gasverteilungskanäle auf und ist mit der Gasverteilungsschicht versehen, die eine Druckfestigkeit von mindestens der Summe aus dem Anpreß- und dem Jeweiligen Wasserstoffenddruck aufweist und eine glatte bzw. ebene Oberfläche besitzt. Gemäß einer anderen Ausführungsform besitzt die Stromkollektorplatte oberflächenseltig Gasverteilungskanäle und ist mit der Gasverteilungsschicht versehen, die eine Druckfestigkeit von mindestens der Summe aus dem Anpreßdruck und dem jeweiligen Wasserstoffenddruck sowie eine ausreichende Biegefestigkeit aufweist, so daß der Anpreßdruck der Membran trotz der vorhandenen Gaskanäle gleichmäßig auf der ganzen Fläche verteilt ist. Die Gasverteilungsschicht kann beispielweise aus Metallfaser- bzw. Metallfilzplatten gebildet sein.

Die CO-oxidationsselektive Katalysatorschicht der Doppelschichtanode umfaßt geeigneterweise eine elektrisch leitende Matrix und ein oxidisches Trägermaterial, das mit feinen, metallischen CO-oxidationsselektiven Katalysatorpartikeln belegt ist. Als Material für die elektrisch leitende Matrix eignet sich beispielsweise Metallfilz oder Graphit.

Das oxidische Trägermaterial verstärkt die katalytische Wirkung (spillover-Effekt) und ist beispielsweise aus Zirkonoxid, Titandioxid, Cobaltoxid, Ceroxid, Praesodymiumoxid, Yttriumoxid, deren Mischungen oder Mischoxiden hiervon gebildet. Die spezifische Oberfläche dieser oxidischen Trägermaterialien beträgt geeigneterweise 1 bis 100 m²/g, vorzugsweise mehr als 10 m²/g.

Die CO-oxidationsselektiven Katalysatorpartikel sind beispielsweise aus Gold. Ruthenium. Rhodium oder deren Legierungen gebildet.

Die zweite, elektrochemisch wirkende Elektrodenschicht der Doppelschichtanode ist aus Materialien gebildet, wie sie üblicherweise für PEM-Anoden verwendet werden.

Die erfindungsgemäße Vorrichtung kann eine einzelne PEM-Zelle umfassen. Um Differenzdrucke von mehr als etwa 15 bar zu erreichen, wird jedoch vorzugsweise mindestens eine zweite PEM-Zelle mit der ersten PEM-Zelle in Reihe geschaltet. Diese zweite und gegebenenfalls jede weitere PEM-Zelle umfaßt eine protonenleitende Polymermembran, eine Anode auf der einen und eine Kathode auf der anderen Seite der Membran sowie eine auf der Anodenseite vorgesehene, ebene, poröse Gasverteilungsschicht. die an eine Stromkollektorplatte anschließt. so daß diese Zelle einem Differenzdruck von mehr als etwa 15 bar standhält.

Die bei der erfindungsgemäßen Vorrichtung verwendete protonenleitende Polymermembran besteht aus üblicherweise für PEM-Zellen verwendeten Materialien, wie sie beispielsweise unter der Handelsbezeichnung Nation erhältlich sind. Diese Polymermembran wird in an sich bekannter Weise auf beiden Seiten mit je einer Elektrode versehen, welche geeigneterweise aus einem katalytisch aktivierten Trägersubstrat und Bindemitteln bestehen, beispielsweise Kohlenstoffruß und Polytetrafluorethylen. Als Katalysator kommen an sich bekannte Materialien in Betracht, welche eine ausreichend hohe Aktivität für die Wasserstoffoxidation bzw. -reduktion aufweisen, vorzugsweise Metalle und Legierungen der Platin-Gruppe.

Die Regelung der Kompressionsleistung der PEM-Zellen erfolgt geeigneterweise mittels eines Regelsignals. Hierzu wird die den zur Kompression erforderlichen Strom aufbringende Spannungsquelle periodisch während eines kurzen Zeitintervalls abgeschaltet und das sich am Ende oder während der Abschaltzeit einstellende Potential gemessen. Dieses Potential ermöglicht eine Istdruckbestimmung nach der Nernst-Gleichung. Dieses Potential wird über eine übliche Regelvorrichtung mit dem sich bei Soldruck einstellenden Potential verglichen, und aus der Differenz wird alternativ der Zellstrom oder die Zellspannung vorgegeben. Das angewandte Regelverfahren unterliegt keiner besonderen Beschränkung, vorzugsweise wird jedoch eine Ein/Aus-Regelung oder ein PID-Regelverfahren verwendet.

Das PID (Proportional-Integral-Differential)-Verfahren ist ein bekanntes Regelverfahren und beinhaltet die Festlegung der Stellgröße additiv aus (i) einem der Differenz zwischen Regel- und Führungsgröße proportionalen Signal sowie (ii) aus einem aus (i) gebildeten Integralsignal und (iii) aus einem aus (i) gebildeten Differentialsignal. Durch geeignete Festlegung der aus (i), (ii) und (iii) resultierenden Signalanteile an der Stellgröße kann ein günstiges Einschwingverhalten der Regelung erhalten werden.

Der Aufbau einer erfindungsgemäß eingesetzten Doppelschichtanode ist beispielhaft in Figur 1 gezeigt. Hierbei ist mit 5 die Doppelschichtanode, mit 1 die CO-oxidationsselektive Katalysatorschicht und mit 2 die elektrochemisch aktive Schicht für die Oxidation des Wasserstoffs zu Protonen gezeigt. Die Katalysatorschicht 1 besteht hierbei aus einer elektrisch leitenden Metallfilzmatrix 6, die ein die katalytische Wirkung verstärkendes, oxidisches Trägermaterial 7 mit einer spezifischen Oberfläche von mehr als etwa 10 m²/g hält. Das Trägermaterial ist wiederum mit metallischen Katalysatorteilchen 8 in feinster Verteilung belegt. Die elektrochemisch aktive Schicht 2 besteht beispielsweise aus einer Platin/Ruthenium-Dünnschichtanode. Die Doppelschichtanode 5 befindet sich im Verbund mit einer Polymermembran 3 und einer Platin/Kohlenstoff-Kathode 4.

## Patentansprüche

1. Vorrichtung zur kombinierten Reinigung und Kompression von CO-haltigem Wasserstoff, umfassend eine Polymer-Elektrolyt-Membran (PEM)-Zelle mit einer protonenleitenden Polymermembran (3), einer Anode auf der einen und einer Kathode (4) auf der anderen Seite der Membran, wobei die Anode als Doppelschichtanode (5) ausgebildet ist, die eine CO-oxidationsselektive Katalysatorschicht (1) auf der der Membran abgewandten Seite sowie eine elektrochemisch aktive Schicht (2) zur Oxidation des Wasserstoffs zu Protonen auf der der Membran zugewandten Seite umfaßt, wobei die CO-oxidationsselektive Katalysatorschicht (1) der Doppelschichtanode (5) eine elektrisch leitende Metellfilz-Matrix (6) und ein oxidisches Trägermaterial (7), das mit metallischen CO-oxidationsselektiven Katalysatorpartikeln (8) belegt ist, umfaßt, und mit einer an der Anodenseite vorgesehenen, ebenen porösen Gasverteilungsschicht, die an einen Stromkollektor anschließt, so daß die PEM-Zelle Differenzdrucken von mindestens etwa 10 bar standhält.

2. Vorrichtung nach Anspruch 1 , umfassend mindestens eine zweite, mit der ersten PEM-Zelle in Reihe geschaltete PEM-Zelle, um den gereinigten und vorkomprimierten Wasserstoff auf den Jeweiligen Enddruck zu komprimieren, wobei die zweite PEM-Zelle eine protonenleitende Polymermembran, eine Anode auf der einen und eine Kathode auf der anderen Seite der Membran sowie eine auf der Anodenseite vorgesehene, ebene poröse Gasverteilungsschicht, die an einen Stromkollektor anschließt, umfaßt, so daß die zweite PEM-Zelle einem Differenzdruck *von* mehr als etwa 15 bar standhält.

3. Vorrichtung nach Ansprüch 1 und/oder 2, wobei die Stromkollektoren an der Anodenseite der PEM-Zellen eine ebene Oberfläche ohne Gasverteilungskanäle aufweisen und die Gasverteilungsschicht eine Druckfestigkeit von mindestens der Summe aus Anpreß- und dem jeweiligen Wasserstoffenddruck aufweist.

4. Vorrichtung nach mindestens einem der Ansprüche 1 bis 3, wobei die Gasverteilungsschicht aus einer Metallfaserplatte gebildet ist.

5. Vorrichtung nach mindestens einem der Ansprüche 1 bis 4, umfassend weiterhin eine Einrichtung zur Regelung des jeweiligen Wasserstoffenddrucks der PEM-Zelle mittels eines Regelsignals, das in regelmäßigen Intervallen durch eine Abschaltung der Spannungsquelle der Zelle und Bestimmung der Abweichungen der dann gemessenen Zellspannungen von der aus der Nernst-Gleichung sich ergebenden Spannung, erzeugt wird.

6. Vorrichtung nach Anspruch 5. wobei das Regelsignal durch ein Ein/Aus- oder ein PID-Verfahren gebildet wird.

7. Verfahren zur kombinierten Reinigung und Kompression von CO-haltigem Wasserstoff mittels einer Vorrichtung nach mindestens einem der Ansprüche 1 bis 6, wobei das CO in dem CO-haltigen Wasserstoff in der PEM-Zelle selektiv zu CO₂ oxidiert wird, indem dem Wasserstoff eine dem CO-Gehalt entsprechende Menge Sauerstoff beigemischt wird. welcher das CO an der CO-oxidationsselektiven Katalysatorschicht der Doppelschichtanode katalytisch zu CO₂ oxidiert, und wobei der nunmehr weitgehend CO-freie Wasserstoff durch die PEM-Zelle elektrochemisch auf Differenzdrucke von mindestens etwa 10 bar komprimiert wird, indem die elektrochemisch aktive Schicht der Doppelschichtanode den Wasserstoff zu Protonen oxidiert, die nach Passieren der Membran an der Kathodenseite unter Druck zu reinstem Wasserstoff entladen werden.

8. Verfahren nach Anspruch 7, wobei als CO-haltiger Wasserstoff ein Methanol-Reformergas eingesetzt wird.

9. Verwendung eines nach dem Verfahren gemäß Anspruch 7 oder 8 erhaltenen Wasserstoffs als Brenngas in PEM-Brennstoffzellen.

## Claims

1. Apparatus for the combined purification and compression ofCO-containing hydrogen, comprising a polymer electrolyte membrane (PEM) cell including a proton-conducting polymer membrane (3), an anode on one side and a cathode (4) on the other side of the membrane, the anode being in the form of a bilayer anode (5) which comprises a CO-oxidation-selective catalyst layer (1) on the side facing away from the membrane and an electrochemically active layer (2) for oxidizing the hydrogen to protons on the side facing the membrane, wherein the CO-oxidation-selective catalyst layer (1) of the bilayer anode (5) comprises an electrically conducting metal felt matrix (6) and an oxidic support material (7) which is coated with metallic CO-oxidation-selective catalyst particles (8), and further including a planar, porous gas distribution layer which is provided at the anode side and adjoins a current collector, so that the PEM cell is able to withstand differential pressures of at least about 10 bar.

2. Apparatus according to Claim 1, comprising at least one second PEM cell connected in series with the first PEM cell, to compress the purified and precompressed hydrogen to the particular final pressure, the second PEM cell comprising a proton-conducting polymer membrane, an anode on one side and a cathode on the other side of the membrane, and a planar, porous gas distribution layer which is provided at the anode side and adjoins a current collector, so that the second PEM cell is able to withstand a differential pressure of more than about 15 bar.

3. Apparatus according to Claim 1 and/or 2, wherein the current collectors on the anode side of the PEM cells have a planar surface without gas distribution ducts and the gas distribution layer has a resistance to pressure of at least the sum of the application pressure and the particular final hydrogen pressure.

4. Apparatus according to at least one of Claims 1 to 3, wherein the gas distribution layer is formed from a metal fibre plate.

5. Apparatus according to at least one of Claims 1 to 4, further comprising a means for controlling the particular final hydrogen pressure of the PEM cell by means of a control signal which is generated at regular intervals by disconnection of the voltage source of the cell and determination of the deviations of the cell voltages then measured from the voltage following from the Nernst equation.

6. Apparatus according to Claim 5, wherein the control signal is formed by an on/off or a PID method.

7. Process for the combined purification and compression of CO-containing hydrogen by means of an apparatus according to at least one of Claims 1 to 6, wherein the CO in the CO-containing hydrogen is oxidized selectively to CO₂ in the PEM cell, by means of the hydrogen being admixed with an amount of oxygen corresponding to the CO content, said oxygen catalytically oxidizing the CO on the CO-oxidation-selective catalyst layer of the bilayer anode to give CO₂, and wherein the now largely CO-free hydrogen is compressed electrochemlcally by the PEM cell to differential pressures of at least about 10 bar, by virtue of the electrochemically active layer of the bilayer anode oxidizing the hydrogen to protons which, having passed the membrane at the cathode side, are discharged under pressure to give ultrapure hydrogen.

8. Process according to Claim 7, wherein the CO-containing hydrogen used is a methanol reformer gas.

9. Use of a hydrogen obtained in accordance with the process according to Claim 7 or 8 as a fuel gas in PEM fuel cells.

## Revendications

1. Dispositif pour épuration et compression combinées d'hydrogène contenant du CO, incluant une cellule à membrane polymère-électrolyte (PEM) comprenant : une membrane polymère (3) conductrice des protons ; une anode d'un coté de la membrane et une cathode (4) de l'autre coté ; l'anode étant réalisée sous forme d'anode double couche (5), qui comprend une couche catalytique (1) pour l'oxydation sélective du CO sur le coté opposé à la membrane ainsi qu'une couche électrochimiquement active (2) pour l'oxydation de l'hydrogène en protons sur le coté tourné vers la membrane ; la couche catalytique pour l'oxydation sélective du CO de l'anode à double couche (5) comprenant une matrice en feutre métallique (6) électriquement conductrice et un matériau porteur (7) oxyde, qui est garni de particules catalytiques (8) métalliques pour l'oxydation sélective du CO ; et comprenant une couche poreuse plane de répartition des gaz, prévue coté anode, qui se raccorde à un collecteur de courant, de sorte que la cellule à PEM résiste à des pressions différencielles d'au moins environ 10 bar.

2. Dispositif selon la revendication 1, comprenant au moins une deuxième cellule à PEM montée en série avec la première cellule à PEM, pour comprimer à la pression finale respective l'hydrogène épuré et précomprimé, la seconde cellule à PEM comprenant une membrane polymère conductrice des protons, une anode d'un coté de la membrane et une cathode de l'autre coté, ainsi qu'une couche poreuse plane de répartition des gaz prévue coté anode, qui se raccorde à un collecteur de courant, de sorte que la seconde cellule à PEM supporte une pression différencielle de plus d'environ 15 bar.

3. Dispositif selon la revendication 1 et/ou 2, dans lequel, du coté anode des cellules à PEM, les collecteurs de courant présentent une surface plane sans canaux de répartition des gaz, et la couche de répartition des gaz présente une résistance à la pression d'au moins la somme de la pression d'appui et de la pression finale d'hydrogène respective.

4. Dispositif selon au moins une des revendications 1 à 3, dans lequel la couche de répartition des gaz est constituée d'une plaque à fibres métalliques.

5. Dispositif selon au moins une des revendications 1 à 4, comprenant en outre un agencement pour réguler la pression finale respective de l'hydrogène de la cellule à PEM au moyen d'un signal de régulation qui est produit à intervalles réguliers par une coupure de la source de tension de la cellule et détermination des écarts des tensions de cellules qui sont ensuite mesurées, par rapport à la tension résultant de l'équation de NERNST.

6. Dispositif selon la revendication 5, dans lequel le signal de régulation est formé par un procédé marche/arrêt ou un procédé PID.

7. Procédé pour épuration et compression combinées d'hydrogène contenant du CO au moyen d'un dispositif selon au moins une des revendications 1 à 6, dans lequel on oxyde sélectivement en CO₂ dans la cellule à PEM le CO de l'hydrogène contenant du CO, en ajoutant par mélange à l'hydrogène une quantité d'oxygène correspondant à la teneur en CO, oxygène qui oxyde catalytiquement le CO en CO₂ sur la couche catalytique pour l'oxydation sélective du CO de l'anode à double couche, et dans lequel l'hydrogène désormais très pauvre en CO est comprimé électrochimiquement par la cellule à PEM à des pressions différencielles d'au moins environ 10 bar, par le fait que la couche électrochimiquement active de l'anode à double couche oxyde l'hydrogène en protons qui après franchissement de la membrane sont déchargés sous pression sur le coté cathode en hydrogène très pur.

8. Procédé selon la revendication 7, dans lequel on utilise comme hydrogène contenant du CO un gaz de reformeur au méthanol.

9. Utilisation d'un hydrogène obtenu selon le procédé suivant la revendication 7 ou 8, comme combustible dans une pile à combustible à PEM.
